Europäisches Patentamt

European Patent Office

Office européen des brevets

(11) Numéro de publication : **0 326 445 B1**

## (12) FASCICULE DE BREVET EUROPEEN

(45) Date de publication du fascicule du brevet :
**02.12.92 Bulletin 92/49**

(51) Int. Cl.$^5$ : **H05H 1/34,** B23K 9/28

(21) Numéro de dépôt : **89400048.8**

(22) Date de dépôt : **09.01.89**

(54) **Torche et machine de travail à l'arc, et cartouche pour cette torche.**

(30) Priorité : **25.01.88 FR 8800782**

(43) Date de publication de la demande :
**02.08.89 Bulletin 89/31**

(45) Mention de la délivrance du brevet :
**02.12.92 Bulletin 92/49**

(84) Etats contractants désignés :
**BE DE ES FR GB GR IT LU NL**

(56) Documents cités :
**EP-A- 0 144 267
EP-A- 0 193 456
FR-A- 1 349 668
FR-A- 2 578 137**

(73) Titulaire : **LA SOUDURE AUTOGENE
FRANCAISE
75, Quai d'Orsay
F-75007 Paris (FR)**
(84) **BE DE FR GB LU NL**
Titulaire : **L'AIR LIQUIDE, SOCIETE ANONYME
POUR L'ETUDE ET L'EXPLOITATION DES
PROCEDES GEORGES CLAUDE
75, Quai d'Orsay
F-75321 Paris Cédex 07 (FR)**
(84) **ES GR IT**

(72) Inventeur : **Delzenne Michel
222, Rue du Général Leclerc
F-95130 Franconville (FR)**
Inventeur : **Legrand, Pierre
5, Place Adenauer
F-95300 Pontoise (FR)**

(74) Mandataire : **Le Moenner, Gabriel et al
L'AIR LIQUIDE, Société Anonyme pour l'étude
et l'exploitation des procédés Georges Claude
75, Quai d'Orsay
F-75321 Paris Cédex 07 (FR)**

## Description

La présente invention est relative aux torches de coupage ou soudage plasma comprenant un corps de torche adapté pour recevoir une cartouche interchangeable et des moyens de liaison entre le corps et la cartouche, la cartouche comprenant une electrode et une tuyère.

Le document FR-A-2.578.137 décrit une torche du type précité, dans laquelle l'électrode se visse au fond d'un logement du corps de torche. Cette conception convient pour les torches manuelles mais n'est pas bien adaptée aux machines automatiques de soudage ou de coupage plasma. En effet, le développement récent de ces machines conduit à des vitesses d'avance fortement accrues, et dans ces conditions, le temps d'immobilisation nécessaire au remplacement des pièces d'usure (électrodes et tuyères) doit être réduit au minimum.

L'invention a pour but de fournir une torche particulièrement bien adaptée aux machines automatiques rapides.

A cet effet, l'invention a pour objet une torche du type précité, caractérisée en ce que l'électrode comporte une partie d'extrémité formant queue et les moyens de liaison la cartouche comprennent des moyens d'enfilage axial de la cartouche dans le corps et des moyens de verrouillage de la cartouche en position dans le corps, agissant sur la queue d'électrode, le corps comprenant des moyens de guidage de la tuyère.

Le document FR-A-1.349.668 décrit une torche de soudage par points comportant une électrode de contact comprenant des moyens d'enfilage axial de l'électrode dans le corps de torche et des moyens de verrouillage rapide de l'électrode en position dans le corps et déverrouillables par actionnement de doigts ou l'insertion d'outils dans le corps de torche.

Dans la version de la torche à allumage par court-circuit, l'électrode et la tuyère sont montées à débattement axial mutuel, et le corps de torche comprend un organe de poussée de l'électrode ou de la tuyère, de préférence dans le sens qui les sépare l'une de l'autre, ainsi que des moyens de rappel dans le sens opposé.

L'invention a également pour objet une cartouche pour une torche telle que définie ci-dessus, comprenant des moyens pneumatiques d'actionnement des moyens de verrouillage.

L'invention a encore pour objet une machine de coupage ou soudage plasma comprenant une torche telle que définie ci-dessus, et des moyens de positionnement sélectif de cette torche.

Quelques exemples de réalisation de l'invention vont maintenant être décrits en regard des dessins annexés, sur lesquels :

- la figure 1 est une vue d'ensemble en perspective d'une machine automatique de coupage plasma conforme à l'invention ;
- la figure 2 est une vue en coupe longitudinale d'une torche de coupage plasma équipant la machine de la figure 1 ;
- la figure 3 représente en élévation et en coupe un poste d'extraction de cartouches appartenant à la machine de la figure 1 ;
- la figure 4 est une vue correspondante de dessus ;
- la figure 5 représente en élévation et en coupe un poste de chargement de cartouches appartenant à la machine de la figure 1 ;
- la figure 6 est une vue correspondante de dessus ;
- la figure 7 est une vue en coupe longitudinale d'une variante de la torche de la figure 2 ;
- la figure 8 est une vue en coupe longitudinale d'une cartouche interchangeable avec celles des figures 2 et 7 ;
- la figure 9 est une vue prise en coupe sur la ligne IX-IX de la figure 8 ;
- la figure 10 est une vue en coupe longitudinale d'une autre torche adaptée pour équiper une machine automatique telle que celle de la figure 1 ;
- la figure 11 est une vue analogue de la torche de la figure 12, en fonctionnement ;
- la figure 12 est une vue en élévation, avec coupe partielle, d'une variante de la torche des figures 10 et 11 ;
- la figure 13 est une vue en coupe longitudinale d'une autre cartouche adaptée pour équiper une machine automatique telle que celle de la figure 1 ;
- la figure 14 est une vue partielle en coupe prise suivant la ligne XIV-XIV de la figure 13 ; et
- les figures 15 à 17 sont des vues analogues de la figure 13, mais correspondant à des variantes.

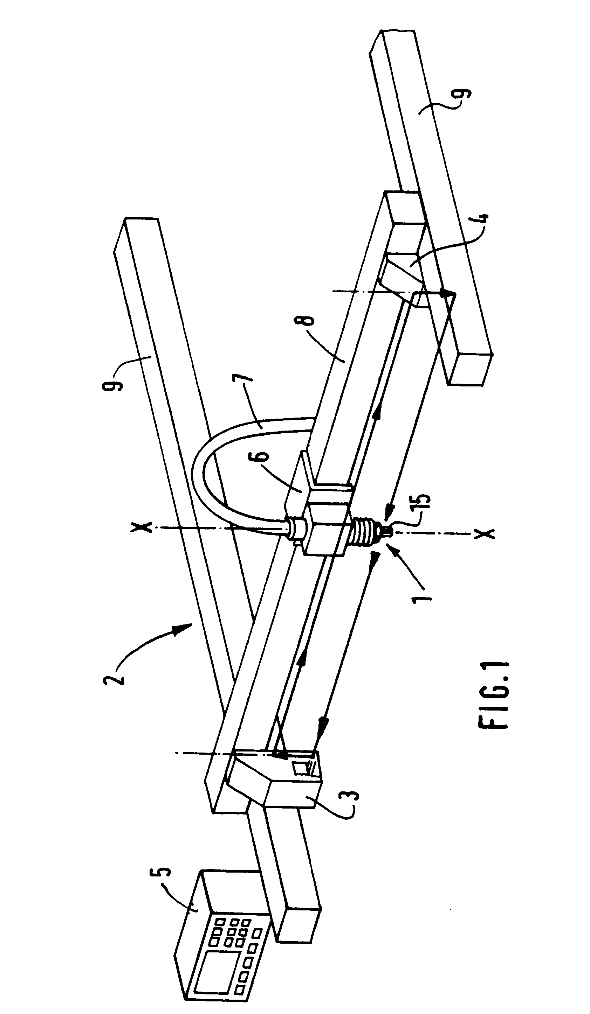

La machine représentée à la figure 1 est une machine à commande numérique destinée au coupage plasma automatique de tôles à grande vitesse (par exemple 15 à 20 m/mn). Elle comprend essentiellement une torche 1 portée par un dispositif 2 de déplacement XY, un poste 3 d'extraction de cartouches usées, un poste 4 de chargement de cartouches neuves, et une centrale de commande 5. Le dispositif 2 comprend lui-même un chariot porte-torche 6 muni d'alimentations électrique et en gaz 7, ce chariot coulissant sur une traverse 8 dont les deux extrémités roulent sur deux poutres longitudinales 9. Le chariot 6 comprend également des moyens (non représentés) pour soulever et abaisser la torche 1 suivant son axe vertical X-X.

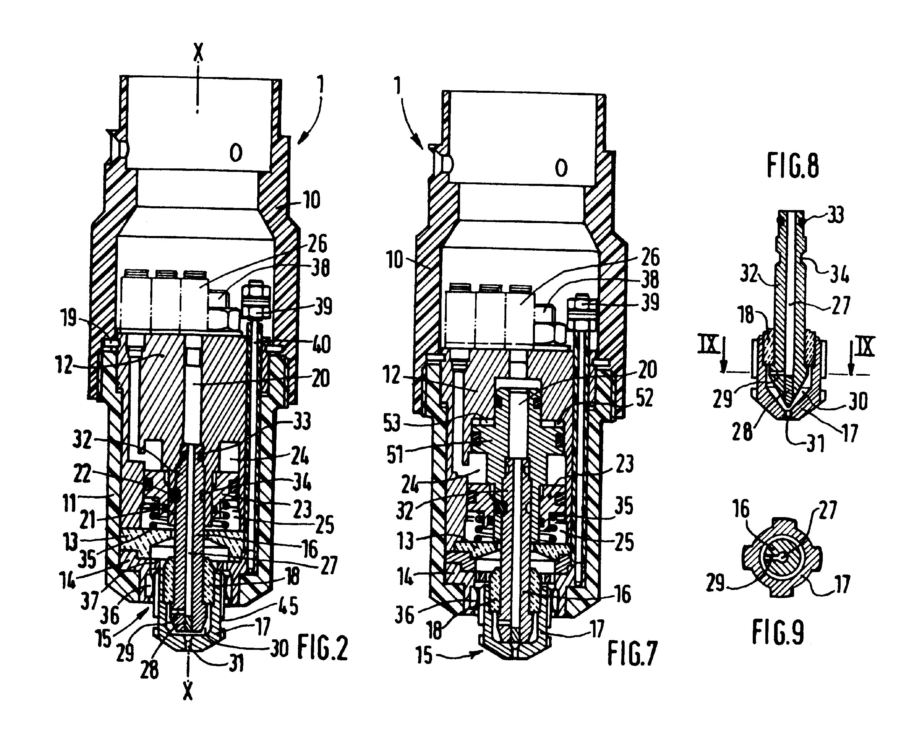

Avant de décrire en détail le fonctionnement de la machine de la figure 1, on décrira la structure de la torche 1, en regard de la figure 2. Cette torche, du type à allumage par haute fréquence, comprend d'une part un corps de torche constitué par un corps extérieur et un corps intérieur, et d'autre part une cartouche interchangeable. Le corps extérieur, de forme générale annulaire, comprend un élément supérieur 10 en matière isolante, solidaire du chariot 6, et un élément inférieur 11, également isolant, vissé au précédent le corps intérieur est constitué d'un corps supérieur 12 conducteur, d'une cale isolante 13 et d'un corps inférieur 14 conducteur ; et la cartouche interchangeable, référencée 15, est constituée d'une électrode 16 et d'une tuyère 17 séparées par un isolateur 18.

Le corps supérieur 12, calé dans l'élément 10 au moyen d'un circlips 19, présente un alésage axial 20 dont la partie inférieure a un diamètre élargi. Une profonde gorge annulaire partant de la face d'extrémité inférieure du corps 12 entoure l'alésage 20. Un manchon 21, percé d'une couronne de trous, sépare la gorge de cet alésage. Dans chaque trou est disposée une bille 22, et une bague de verrouillage 23 coulisse à joint étanche dans la gorge en délimitant une chambre supérieure hermétique 24 et une chambre inférieure 25. Des conduits prévus dans le corps 12 débouchent dans les chambres 24 et 25 respectivement et sont reliés, ainsi que l'alésage 20, à des raccords pneumatiques 26 montés sur la face supérieure du même corps.

L'électrode 16 a une forme générale tubulaire, avec un conduit axial 27 obturé à son extrémité inférieure par un insert 28 en zirconium ou en hafnium constituant l'électrode proprement dite. Un perçage horizontal 29 tangent à l'alésage 27 est ménagé un peu au-dessus de l'insert 28. L'isolateur 18 est positionné un peu au-dessus du perçage 29 par un épaulement extérieur de l'électrode, et la tuyère 17 est fixée par sertissage sur cet isolateur, de façon à ménager entre l'électrode et la tuyère une chambre 30 de gaz plasmagène. La tuyère comporte un perçage axial 31 pour la sortie du jet de plasma, et une série d'ailettes longitudinales extérieures.

La partie supérieure 32, ou queue de l'électrode, est pourvue près de son extrémité d'un joint d'étanchéité 33 et présente une gorge circulaire 34. Pour mettre en place la cartouche, on amène la bague 23 en position basse, ce qui amène un évidement intérieur de cette bague en regard des billes 22. On enfonce ensuite la queue 32 dans l'alésage 20, jusqu'à ce qu'elle butte contre le fond de la partie élargie de ce dernier. La gorge 34 se trouve alors en regard des billes, et l'on fait remonter la bague 23, ce qui pousse les billes dans la gorge 34 en assurant le verrouillage de la cartouche. Les opérations inverses permettent l'extraction instantanée de la cartouche en vue de son remplacement. Il est à noter qu'en l'absence de cartouche, une petite lèvre (non représentée) prévue au bord des trous du manchon 21, côté intérieur, empêche la sortie des billes hors de ces trous.

La cale isolante 13 est un disque percé d'un orifice central laissant passer la queue 32 avec un large jeu. Elle est appliquée sur la face inférieure du corps 12, et un ressort 35 est comprimé entre cette cale et la bague 23, tendant en permanence à faire prendre à cette dernière sa position supérieure de verrouillage.

Le corps inférieur 14 est un autre disque, en matière électriquement conductrice, présentant un passage central pour la cartouche 15. Il est muni d'une douille élastique 36 assurant le guidage de la tuyère 17 avec un certain serrage exercé sur les ailettes de celle-ci. Le corps 14 présente également une couronne de trous 37 pour l'échappement autour de la tuyère du gaz injecté dans la chambre 25.

En ce qui concerne les connexions électriques, on a représenté au-dessus du corps supérieur 12 une borne 38 (par exemple négative) commune aux trois circuits haute fréquence, arc pilote et de puissance, et une borne 39, reliée par un conducteur 40 au corps inférieur 14, commune aux deux premiers circuits, l'autre pôle du circuit de puissance étant relié à la pièce à découper. La douille élastique 36 assure le contact électrique entre la borne 39 et la tuyère 17.

En fonctionnement, la torche de la figure 2 étant montée sur la machine de la figure 1, on procède de façon classique au coupage désiré en déplaçant le chariot 6 suivant le profil de coupe prévu, la pièce à découper étant posée à plat sous la torche. Après un certain nombre d'amorçages d'arc ou un certain nombre d'heures de fonctionnement continu, correspondant à une usure prédéterminée de l'électrode ou de la tuyère, on procède au cycle d'opérations suivant, commandé soit manuellement, soit de façon automatique par commande numérique, micro-ordinateur ou automate programmable :

- neutralisation des fonctions de coupage ;
- transfert de la torche au poste 3 d'extraction ;
- déverrouillage de la cartouche 15 par mise sous pression de la chambre supérieure 24 ;
- extraction de la cartouche, de la manière décrite ci-dessous ;
- transfert de la torche sans cartouche au poste 4 de chargement ;
- mise en place d'une cartouche neuve, de la manière décrite ci-dessous ;
- verrouillage de la nouvelle cartouche par mise sous pression de la chambre inférieure 25 ;
- retour de la torche au point origine de début de programme ;

- activation des fonctions de coupage.

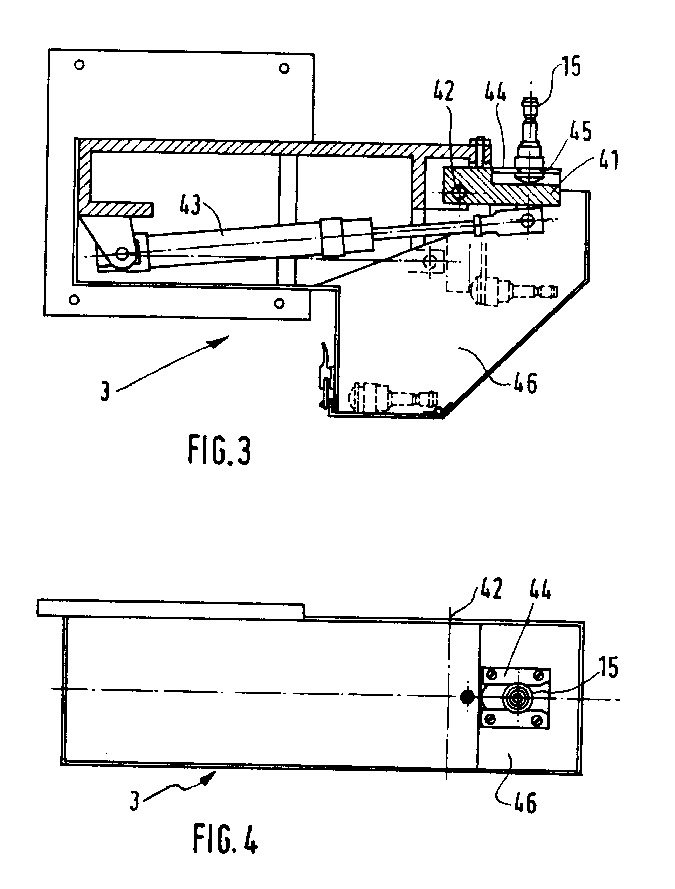

Le poste d'extraction 3, représenté aux figures 3 et 4, comprend essentiellement une glissière basculante 41 articulée autour d'un axe horizontal 42 parallèle aux poutres 9 et actionné par un vérin pneumatique 43. La glissière est parallèle à la traverse 8 et comprend deux fers plats parallèles 44. Lorsque la torche arrive au poste 3, ces deux fers s'engagent dans une gorge discontinue 45 ménagée dans les ailettes de la tuyère (figure 2), puis, après déverrouillage de la cartouche, le corps de torche est soulevé par le chariot 6 jusqu'à dégagement complet de la cartouche 15, celle-ci ayant alors la position illustrée aux figures 3 et 4. En rétractant le vérin 43, la glissière 41 bascule, et la cartouche tombe dans un réceptacle 46 du poste 3, comme illustré en trait interrompu à la figure 3.

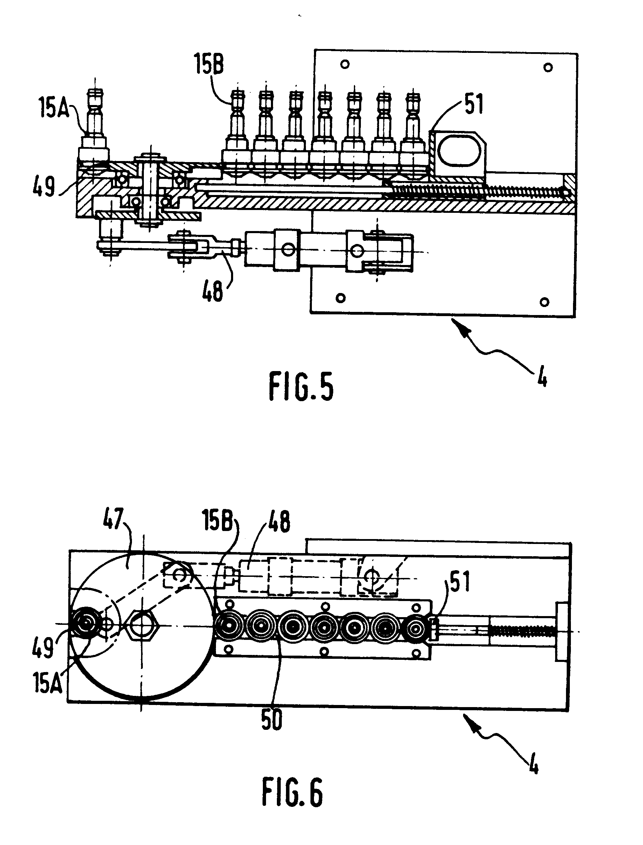

Le poste de chargement 4, représenté aux figures 5 et 6, comprend essentiellement un plateau tournant 47 actionné sur un demi-tour en va-et-vient par un vérin pneumatique 48 et un système bielle-manivelle, et muni d'une encoche 49 adaptée pour s'emboîter dans la gorge 45 d'une cartouche 15, ainsi qu'une glissière horizontale 50 parallèle à la traverse 8 et constituée comme la glissière 41 mais de plus grande longueur, cette glissière 50 servant de réserve de cartouches neuves.

Dans la position d'attente illustrée, l'encoche 49 se trouve à l'opposé de la glissière 50 et contient une cartouche 15A, tandis que la file de cartouches en attente est pressée vers l'autre côté du plateau 47 par un poussoir à ressort 51. Pour charger une nouvelle cartouche, le corps de torche vient se positionner coaxialement à la cartouche 15A, au-dessus de celle-ci, et est abaissé par le chariot 6. La queue de l'électrode s'enfile dans l'alésage 20 pendant que la chambre 24 est pressurisée, puis la chambre 25 est pressurisée et la chambre 24 dépressurisée pour assurer le verrouillage de la cartouche 15A. La torche repart ensuite horizontalement, parallèlement à la traverse 8. Puis, par rotation d'un demi-tour du plateau 47, l'encoche 49 vient chercher la première cartouche en réserve 15B et le plateau revient à sa position d'attente, prêt au chargement suivant de la torche 1.

En variante, le poste 4 pourrait comporter plusieurs réserves de cartouches, correspondant chacune à un type déterminé de cartouches et disposées en étoile autour du plateau tournant 47.

Ainsi, les opérations de changement de cartouche peuvent s'opérer automatiquement et de façon extrêmement rapide, grâce au déverrouillage et au verrouillage instantanés de la cartouche au moyen de la bague 23.

Il est à noter que le gaz injecté dans la chambre 25 constitue à la fois le moyen de verrouillage de la cartouche et le flux de gaz de refroidissement de la torche, s'écoulant autour de la tuyère 17. Par suite, la pression de verrouillage de la bague 23 est inférieure à sa pression de déverrouillage (la chambre 24 étant hermétique), et la différence entre les deux pressions est compensée par le ressort 35.

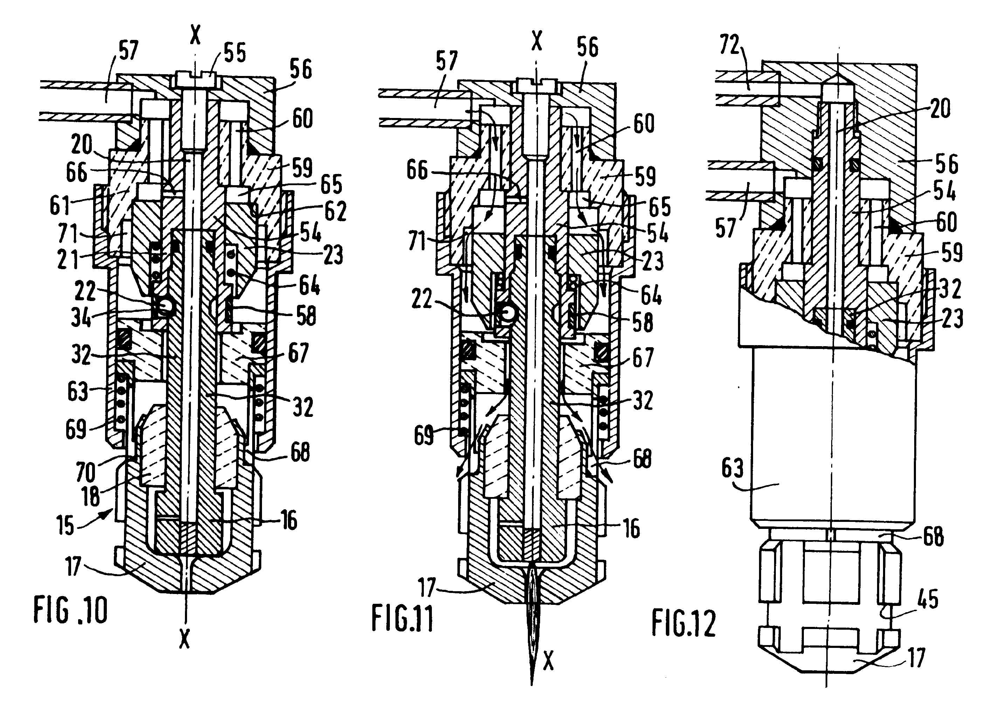

La figure 7 montre une variante de la figure 2 qui n'en diffère que par les points suivants :
- l'électrode est montée coulissante dans l'isolateur 18, entre une position basse d'amorçage d'arc dans laquelle elle est en butée contre la tuyère 17 et une position haute de travail dans laquelle elle bute contre l'isolateur ;
- une partie du corps supérieur 12 constitue un porte-électrode 51 formant un piston. Une chambre supérieure 52 reliée à un raccord tel que 26 et délimitée au-dessus de ce piston contient un ressort annulaire 53 rappelant ce dernier vers le bas, de sorte que la chambre 24 devient une chambre intermédiaire.

Du point de vue électrique, la source haute fréquence est supprimée, l'allumage de l'arc s'effectuant par court-circuit. Le tableau de la page suivante décrit les séquences d'alimentation des circuits pneumatiques, d'une part en fonctionnement normal (flèches pleines), d'autre part lors du remplacement d'une cartouche (flèches mixtes).

Comme on le voit aux figures 8 et 9, pour chaque type d'allumage (haute fréquence ou court-circuit), on peut utiliser avec le même corps de torche des cartouches ayant une configuration interne différente mais extérieurement identiques et donc interchangeables. Ainsi, les cartouches des figures 2 et 7 sont adaptées à un gaz plasmagène oxydant (air ou oxygène) : le conduit central 27 de l'électrode communique avec la chambre 30 par un ou plusieurs trous 29 disposés en vortex, c'est-à-dire tangent au conduit 27, et l'électrode a une extrémité plate. Au contraire, la cartouche des figures 8 et 9 correspond au cas d'un gaz plasmagène neutre (argon par exemple) : le ou les trous 29 sont radiaux, et l'extrémité de l'électrode est pointue ; plus précisément, l'insert 18 lui-même est pointu, et il est de préférence réalisé en tungstène. Plus généralement, on peut utiliser une grande variété de cartouches adaptées à la puissance de l'arc, à la nature et à l'épaisseur des matériaux à découper, et/ou à la nature du gaz plasmagène.

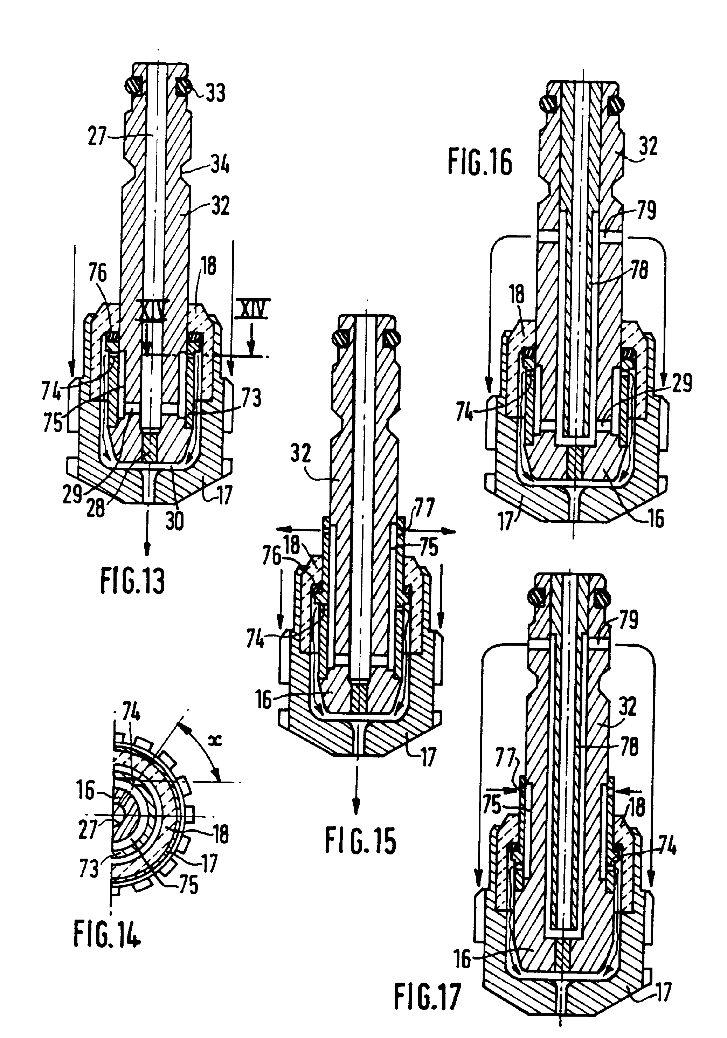

La torche représentée aux figures 10 et 11 constitue une variante de celle de la figure 7 et peut être équipée de la même cartouche 15. Elle en diffère par la structure du corps de torche, qui comprend :
- un corps supérieur tubulaire conducteur 54 sur lequel est fixée par une vis 55 un chapeau 56. Ce dernier présente une arrivée latérale de gaz 57. L'extrémité inférieure du corps 54 forme le même manchon 21 que précédemment, à ceci près que les billes 22 sont constamment pressées vers l'axe X-X par un anneau élastique 58.

- un isolateur intermédiaire 59 entourant la partie supérieure du corps 54, percé d'une couronne de trous axiaux 60 et se prolongeant vers le bas par une jupe 61 qui présente intérieurement un épaulement 62 dirigé vers le bas ;

- un corps inférieur tubulaire conducteur 63 fixé sur la jupe 61.

La bague 23 coulisse sur le corps 54. Elle présente un évidement intérieur logeant un ressort 64 de rappel vers le haut, lequel

| | CHAMBRE DE PRESSION SUPERIEURE 52 | CHAMBRE DE PRESSION MEDIANE 24 | CHAMBRE DE PRESSION INFERIEURE 25 | GAZ PLASMAGENE (ALESAGE 20) |
|---|---|---|---|---|
| Verrouillage de la cartouche | 1 | 0 | 1 | 0 |
| Déverrouillage de la cartouche | 1 | 1 | 0 | 0 |
| Mise en court-circuit électrode-tuyère | 1 | 0 | 0 | 1 |
| Etablissement de l'arc pilote | 0 | 0 | 1 | 1 |
| - Transfert de l'arc de puissance entre électrode et pièce<br>- Coupure de l'arc pilote<br>- Séquence de coupage | 0 | 0 | 1 | 1 |
| - Coupure de l'arc de puissance<br>- Arrêt de la coupe | 0 | 0 | 0 | 0 |

s'appuie sur un épaulement extérieur du manchon 21. En position haute de déverrouillage, la bague 23 s'applique, avec une étanchéïté relative, contre l'épaulement 62 défini dans la jupe 61. Une chambre 65 est alors définie par l'isolateur 59, la bague 23 et le corps 54, et un perçage radial calibré 66 ménagé dans ce corps relie cette chambre 65 à l'alésage 20.

Par ailleurs, un organe de poussée annulaire 67, électriquement isolant, coulisse dans le corps inférieur 63. Il est associé à une pince élastique métallique 68 à plusieurs griffes dirigées vers le bas, l'ensemble étant sollicité vers le haut, en butée contre la tranche d'extrémité du manchon 21, par un ressort métallique 69. L'organe 67 entoure la queue 32 de l'électrode avec un jeu radial notable.

Du point de vue électrique, le potentiel électrode est établi via le corps 54, et le potentiel tuyère via le corps 63, le ressort 69 et la pince 68.

La torche des figures 10 et 11 fonctionne de la façon suivante.

Pour mettre en place la cartouche 15, comme précédemment, on l'enfile axialement dans le corps de torche. Grâce à l'anneau élastique 58, il se produit un encliquetage des billes dans la gorge 34 de l'électrode, réalisant un pré-verrouillage de la cartouche. Les griffes de la pince 68 enserrent alors élastiquement la partie supérieure, de diamètre extérieur réduit, de la tuyère 17 et se trouvent en regard de l'épaulement 70 ainsi formé sur cette tuyère. Le nez de l'électrode 16 est en contact mécanique, donc électrique, avec le fond de la tuyère 17.

Lorsque l'opérateur commande l'amorçage de la torche, une source électrique auxiliaire est enclenchée, réalisant un court-circuit entre l'électrode et la tuyère. Dans le même temps, une électro-vanne est ouverte et envoie une pression de gaz dans la chambre 65 par l'entrée 57 et les trous 60. Une partie du gaz est dérivée à ce niveau vers le circuit plasmagène, c'est-à-dire dans l'alésage 20 et le conduit central de l'électrode, via le perçage calibré 66. Lorsque la pression dans la chambre 65 est supérieure à la poussée du ressort 64, la bague 23 descend le long du corps 54 jusqu'à faire communiquer la chambre 65 avec une série de rainures axiales 71 pratiquées dans l'isolateur 59 et s'étendant de la face inférieure de cet isolateur jusqu'à un niveau situé un peu au-dessous de l'épaulement 62.

Une situation d'équilibre s'établit alors entre la pression du gaz exercée sur la bague 23 et la poussée du ressort 64. Dans cette position, la bague 23 coiffe l'anneau élastique 58 et lui interdit l'épanouissement nécessaire pour libérer les billes 22 de la gorge 34. Ainsi, tant que la pression de gaz est maintenue, le démontage de la cartouche ou son éjection est impossible.

Une pression s'exerce à son tour sur la face supérieure de l'organe 67, comprimant le ressort 69 et entraînant le coulissement vers le bas de l'ensemble organe 67, pince 68 et tuyère 17 jusqu'à mise en butée arrière de l'électrode sur l'isolateur 18 de la cartouche. C'est cette position qui est illustrée sur la figure 11.

Ce mouvement, dans une période transitoire, crée les conditions favorables à un étincelage entre l'extrémité de l'électrode et le fond de la tuyère, lui-même propice à l'allumage de l'arc pilote. Par ailleurs, l'organe 67 se trouvant séparé de l'extrémité du corps 54, le gaz peut circuler entre l'alésage central de l'organe 67 et la queue de l'électrode, en assurant au passage le refroidissement de celle-ci, et s'écouler au travers des fentes séparant les griffes de la pince élastique, sur le ressort 69 et sur les ailettes de la tuyère, permettant ainsi le refroidissement de tous ces éléments.

A partir de l'allumage de l'arc pilote, si une pièce à couper correctement reliée à la source électrique de puissance se trouve à distance convenable de la tuyère, le processus de transfert de l'arc, de l'électrode à la pièce, peut s'effectuer et la séquence de coupage commencer.

On dispose ainsi d'une torche à allumage par court-circuit avec électrode fixe et tuyère mobile, pouvant convenir pour une machine automatique rapide.

Au lieu d'une unique alimentation en gaz comme à la figure 10, la torche peut (figure 12) comporter deux alimentations, l'une en gaz de refroidissement, analogue à l'entrée 57, l'autre 72 en gaz plasmagène, débouchant directement dans l'alésage 20 du corps 54, via un alésage du chapeau 56.

Les figures 13 à 16 représentent diverses variantes de la cartouche 15 de la figure 7, qui ont toutes en commun l'utilisation d'un manchon 73, porté par l'électrode 16, dans lequel sont percés des orifices 74 débouchant dans la chambre 30. Dans l'exemple des figures 13 et 14, le gaz plasmagène passe ainsi du conduit central 27 de l'électrode à la chambre 30 par l'intermédiaire des trous 29, d'une gorge annulaire 75 de l'électrode prévue en regard du manchon 73, et des orifices 74.

Un premier avantage de cette disposition réside dans la possibilité d'augmenter l'angle $x$ (figure 14) que forme la direction des orifices 74 avec la direction radiale, et donc l'efficacité du vortex de gaz plasmagène. Un second avantage réside dans la possibilité d'utiliser pour le manchon 73 du laiton, nettement plus facile à percer que le cuivre constituant l'électrode 16. De plus, pour changer de type d'écoulement du gaz plasmagène, il suffit de changer le manchon 73.

Par ailleurs, la butée arrière de l'électrode s'effectue par l'intermédiaire d'un joint torique 76 assurant, en fonctionnement, une étanchéïté parfaite entre l'extrémité supérieure du manchon 73 et l'isolateur 18.

Les différentes configurations des figures 13 à 17 correspondent aux cas suivants :
- figures 13 et 14 : cette cartouche est bien adaptée au fonctionnement avec un courant de puissance de faible intensité ;
- figure 15 : le manchon 73 se prolonge vers le haut, au-delà d'un épaulement coopérant avec le joint 76, jusqu'au dehors de l'isolateur 18, où sont percés d'autres orifices de fuite 77. Ceci permet d'augmenter le débit de gaz circulant dans l'électrode et donc, grâce au meilleur refroidissement de cette dernière, de supporter des intensités supérieures.
- figure 16 : cette cartouche correspond à une alimentation unique en gaz plasmagène et de refroidissement. La totalité du gaz pénètre dans l'électrode à travers un tube plongeur 78 descendant presque jusqu'à l'insert 28 de l'électrode. De là, une partie du gaz est dévié dans la gorge 75 via les trous 29 et constitue le gaz plasmagène, et le reste remonte jusqu'à d'autres orifices 79 ménagés dans la queue de l'électrode au-dessus de l'isolateur 18, pour constituer le gaz de refroidissement. Les orifices 29 et 79, ménagés dans une même pièce métallique 16, constituent un diviseur de débit précis, et le refroidissement énergique de l'électrode par la totalité du débit gazeux permet de travailler avec des intensités de courant encore accrues.
- figure 17 : on retrouve là le manchon long à trous 77 de la figure 15 et le tube plongeur et les orifices 79 de la figure 16, mais les trous 29 sont supprimés. Les trous 77 servent à l'introduction séparée du gaz plasmagène dans la gorge 75, permettant un réglage précis de son débit. Là encore, le mode de refroidissement de l'électrode permet de supporter des intensités de courant élevées.

Comme on le comprend, les cartouches des figures 13 à 17 peuvent être utilisées dans des torches à allumage par haute fréquence, en rendant fixes l'une par rapport à l'autre l'électrode et la tuyère.

Par ailleurs, toutes les torches décrites plus haut peuvent s'appliquer non seulement au coupage des métaux, mais également au soudage des métaux (avec utilisation d'un gaz de protection) ou au coupage et au soudage de matériaux non métalliques, par mise en oeuvre d'un arc soufflé.

Il est également à noter que, en principe, rien ne s'oppose à l'utilisation de torches telles que décrites plus haut sous forme manuelle, bien que la configuration particulièrement simple des figures 10 à 12 soit mieux adaptée à une telle utilisation. Dans ce cas, on adjoindra à la torche une coiffe de protection du type de celles couramment utilisées dans les torches manuelles.

En version automatique, les torches suivant l'invention peuvent bien entendu être portées par un "robot" articulé.


## Revendications

1. Torche (1) de coupage ou soudage plasma, comprenant un corps de torche (10 à 14) adapté pour recevoir une cartouche inter-changeable (15) et des moyens de liaison entre le corps (10 à 14) et la cartouche (15), la cartouche (15) comprenant une electrode (16) et une tuyère (17), caractérisée en ce que l'électrode (16) comporte une partie d'extrémité formant une queue (32) et les moyens de liaison comprennent des moyens (20) d'enfilage axial de la cartouche (15) dans le corps (10 à 14) et des moyens (22, 23) de verrouillage de la cartouche (15) en position dans le corps (10 à 14) agissant sur la queue (32) d'électrode, le corps (10 à 14) comprenant des moyens (36 ; 68) de guidage de la tuyère (17).

2. Torche selon la revendication 1, caractérisée en ce que le corps (10-14) comporte des moyens (24 à 26) pneumatiques d'actionnement des moyens de verrouillage (22, 23).

3. Torche selon l'une des revendications 1 et 2, caractérisée en ce que les moyens de verrouillage comprennent au moins une bille (22) retenue dans une cage du corps, et susceptible d'être reçue dans une gorge (34) de la queue d'électrode (32).

4. Torche selon la revendication 2, caractérisée en ce que les moyens d'actionnement comprennent un piston (23) coulissant dans le corps et coopérant avec la bille (22) et délimitant une chambre (24 ; 65) reliée à une arrivée de gaz à l'arrière du piston (23).

5. Torche selon la revendication 4, caractérisée en ce que les moyens d'actionnement comprennent en outre une arrivée de gaz dans une chambre (25) à l'avant du piston (23), cette chambre débouchant dans un passage de gaz de refroidissement de la torche et étant pourvue d'un ressort (35) de rappel du piston.

6. Torche selon l'une des revendications 1 à 5, caractérisée en ce que l'électrode (16) et la tuyère (17) sont montées à débattement axial mutuel, et en ce que le corps de torche comprend un organe (67) de poussée de l'électrode (16) ou de la tuyère (17), de préférence dans le sens qui les sépare l'une de l'autre, ainsi que des moyens (53 ; 69) de rappel dans le sens opposé.

7. Torche selon les revendications 4 et 6, caractérisée en ce que l'organe de poussée (67) forme piston actionnable pour séparer la tuyère (17) de l'électrode (16).

8. Torche selon l'une des revendications 6 et 7, caractérisée en ce que les moyens d'enfilage axial comprennent des moyens d'encliquetage réversibles (22, 58).

9. Cartouche (15) pour torche selon l'une des revendications 1 à 8 comprenant une électrode (16) et une tuyère (17), caractérisée en ce que l'électrode (16) comporte une queue lisse (32) présentant une gorge (34), et en ce qu'elle comprend un isolateur (18) traversé par l'électrode (16) et sur lequel est fixée la tuyère (17), l'électrode comportant un passage intérieur (27 ; 75) pour un gaz plasmagène communiquant avec une chambre (30) délimitée entre l'électrode (16) et la tuyère (17).

10. Cartouche selon la revendication 9, caractérisée en ce que l'électrode (16) traverse à coulissement l'isolateur (18).

11. Cartouche selon l'une des revendications 9 et 10, caractérisée en ce que ladite communication s'effectue par l'intermédiaire d'un manchon perforé (73) monté sur l'électrode (16).

12. Machine de soudage ou coupage plasma comprenant une torche (1) et des moyens (2) de positionnement sélectif de cette torche, caractérisée en ce que la torche (1) est conforme à l'une des revendications 1 à 8.

13. Machine selon la revendication 12, caractérisée en ce qu'elle comprend un poste (3) d'extraction de cartouches (15) usées et un poste (4) de chargement de cartouches (15) neuves.

14. Machine selon la revendication 13, caractérisée en ce que chacun des postes d'extraction (3) et de chargement (4) comprend une glissière (44, 50) adaptée pour s'engager dans une gorge (45) prévue sur la tuyère (17) de chaque cartouche (15).

15. Machine selon l'une des revendications 13 et 14, caractérisée en ce que le poste de chargement (4) comprend des réserves de plusieurs types différents de cartouches (15).

## Patentansprüche

1. Schneid- oder Schweißplasmabrenner (1) mit einem Brennerkörper (10-14), der geeignet ist für die Aufnahme einer auswechselbaren Patrone (15), und Verbindungsmitteln zwischen dem Körper (10 - 14) und der Patrone (15), wobei die Patrone (15) eine Elektrode (16) und eine Düse (17) aufweist, dadurch gekennzeichnet, daß die Elektrode (16) einen Endteil hat, der ein Endstück (32) bildet, und die Verbindungsmittel Mittel (20) aufweisen zum axialen Aufreihen der Patrone (15) in den Körper (10 - 14) und Mittel (22, 23) aufweisen für das Verriegeln der Patrone (15) in Position in dem Körper (10 - 14), der auf das Endstück (32) der Elektrode wirkt, wobei der Körper (10 - 14) Führungsmittel (36; 68) für die Düse (17) bildet.

2. Brenner nach Anspruch 1, dadurch gekennzeichnet, daß der Körper (10 - 14) pneumatische Betätigungsmittel (24 - 26) für die Verriegelungsmittel (22, 23) aufweist.

3. Brenner nach einem der Ansprüche 1 und 2, dadurch gekennzeichnet, daß die Verriegelungsmittel mindestens eine kleine Kugel (22) aufweisen, die in einem Käfig des Körpers gehalten und in der Lage ist, in einer Auskehlung (34) des Endstückes der Elektrode (32) aufgenommen zu werden.

4. Brenner nach Anspruch 2, dadurch gekennzeichnet, daß die Betätigungsmittel einen Kolben (22) aufweisen, der in dem Körper gleitet und mit der kleinen Kugel (22) zusammenwirkt und eine Kammer (24; 65) abgrenzt, die mit einer Gaszufuhr rückwärtig des Kolbens (23) verbunden ist.

5. Brenner nach Anspruch 4, dadurch gekennzeichnet, daß die Betätigungsmittel ferner eine Gaszufuhr in einer Kammer (25) vor dem Kolben (23) aufweisen, wobei diese Kammer in einen Durchgang für Kühlgas für den Brenner mündet und mit einer Rückholfeder (35) für den Kolben versehen ist.

6. Brenner nach einem der Ansprüche 1 bis 5, dadurch gekennzeichnet, daß die Elektrode (16) und die Düse (17) mit gegenseitiger axialer Bewegung montiert sind und daß der Brennerkörper ein Stoßorgan (67) für die Elektrode (16) oder die Düse (17) aufweist, vorzugsweise in der Richtung, welche die eine von der anderen trennt, sowie Rückholmittel (53; 69) in entgegengesetzter Richtung.

7. Brenner nach den Ansprüchen 4 und 6, dadurch gekennzeichnet, daß das Stoßorgan (67) einen zum Trennen der Düse (17) von der Elektrode (16) betätigbaren Kolben bildet.

8. Brenner nach einem der Ansprüche 6 und 7, dadurch gekennzeichnet, daß die Mittel zum axialen Aufreihen umkehrbare Sperrvorrichtungsmittel (22, 58) aufweisen.

9. Patrone (15) für den Brenner nach einem der Ansprüche 1 bis 8 mit einer Elektrode (16) und einer Düse (17), dadurch gekennzeichnet, daß die Elektrode (16) ein glattes Endstück (32) aufweist, das eine Auskehlung (34) hat, und daß sie einen von einer Elektrode (16) durchquerten Isolator (18) hat, auf dem die Düse (17) befestigt ist, wobei die Elektrode einen inneren Durchgang (27; 75) für ein plasmagenes Gas aufweist, der mit einer zwischen der Elektrode (16) und der Düse (17) begrenzten Kammer (30) in Verbindung steht.

10. Patrone nach Anspruch 9, dadurch gekennzeichnet, daß die Elektrode (16) den Isolator (18) gleitend durchquert.

11. Patrone nach einem der Ansprüche 9 und 10, dadurch gekennzeichnet, daß die Verbindung mittels einer perforierten Muffe (73) erfolgt, die an der Elektrode (16) montiert ist.

12. Schweiß- oder Schneidplasmavorrichtung mit einem Brenner (1) und Mitteln (2) für das wahlweise Positionieren dieses Brenners, dadurch gekennzeichnet, daß der Brenner (1) gemäß einem der Ansprüche 1 bis 8 aufgebaut ist.

13. Vorrichtung nach Anspruch 12, dadurch gekennzeichnet, daß sie einen Entnahmeplatz (3) für benutzte Patronen (15) und einen Ladeplatz (4) für neue Patronen (15) hat.

14. Vorrichtung nach Anspruch 13, dadurch gekennzeichnet, daß der Entnahmeplatz (3) und der Ladeplatz (4) eine Laufschiene (44, 50) aufweisen, die geeignet ist für den Eingriff in einer Auskehlung (45), die an der Düse (17) jeder Patrone (15) vorgesehen ist.

15. Vorrichtung nach einem der Ansprüche 13 und 14, dadurch gekennzeichnet, daß der Ladeplatz (4) Reserven mehrerer Arten unterschiedlicher Patronen (15) aufweist.

## Claims

1. Plasma cutting or welding torch (1), comprising a torch body (10 to 14) adapted to receive an interchangeable cartridge (15) and connecting means between the body (10 to 14) and the cartridge (15), the cartridge (15) comprising an electrode (16) and a nozzle (17), characterised in that the electrode (16) consists of an end portion forming a tail end (32) and the connecting means comprise means (20) for axially threading the cartridge (15) in the body (10 to 14) and means (22, 23) for locking the cartridge (15) in position in the body (10 to 14) acting upon the tail end (32) of the electrode, the body (10 to 14) comprising means (36; 68) for guiding the nozzle (17).

2. Torch according to claim 1, characterised in that the body (10 - 14) comprises pneumatic means (24 to 26) for actuating the locking means (22, 23).

3. Torch according to one of the claims 1 and 2, characterised in that the locking means comprise at least one ball (22) held in a cage of the body and capable of being received in a recess (34) of the electrode tail end (32).

4. Torch according to claim 2, characterised in that the actuating means comprise a piston (23) which slides in the body and cooperates with the ball (22) and delimits a chamber (24; 65) connected to a gas supply at the back of the piston (23).

5. Torch according to claim 4, characterised in that the actuating means comprise, furthermore, a gas supply in a chamber (25) in front of the piston (23), this chamber opening into a cooling gas passage of the torch and being provided with a return spring (35) acting on the piston.

6. Torch according to one of the claims 1 to 5, characterised in that the electrode (16) and the nozzle (17) are mounted with mutual axial clearance and in that the torch body comprises a member (67) for pushing the electrode (16) or the nozzle (17), preferably in the direction which separates them one from the other, as well as return means (53; 69) acting in the opposite direction.

7. Torch according to claims 4 and 6, characterised in that the pushing member (67) constitutes a piston operable to separate the nozzle (17) from the electrode (16).

8. Torch according to one of the claims 6 and 7, characterised in that the axial threading means comprise reversible latching means (22, 58).

9. Cartridge (15) for a torch according to one of the claims 1 to 8, comprising an electrode (16) and a nozzle (17), characterised in that the electrode (16) consists of a smooth tail end (32) with a recess (34) and in that it comprises an insulator (18) across which the electrode (16) passes and on which insulator the nozzle (17) is fixed, the electrode consisting of an interior passage (27; 75) for a plasmagenic gas communicating with a chamber (30) delimited between the electrode (16) and the nozzle (17).

10. Cartridge according to claim 9, characterised in that the electrode (16) passes across the insulator (18) by sliding.

11. Cartridge according to one of the claims 9 and 10, characterised in that said communication is effected by means of a perforated sleeve (73) mounted on the electrode (16).

12. Plasma welding or cutting machine comprising a torch (1) and means (2) for selectively positioning the torch, characterised in that the torch (1) is in accordance with one of the claims 1 to 8.

13. Machine according to claim 12, characterised in that it comprises an extracting station (3) for extracting used cartridges (15) and a loading station (4) for loading new cartridges (15).

14. Machine according to claim 13, characterised in that each of the extracting (3) and loading stations (4) comprises a slide (44, 50) adapted for engagement in a recess (45) provided on the nozzle (17) of each cartridge (15).

15. Machine according to one of the claims 13 and 14, characterised in that the loading station (4) comprises reserves of several different types of cartridges (15).

FIG.1

FIG.2

FIG.7

FIG.8

FIG.9

EP 0 326 445 B1

FIG.3

FIG. 4

FIG.5

FIG.6

FIG.10

FIG.11

FIG.12

EP 0 326 445 B1

FIG.13

FIG.14

FIG.15

FIG.16

FIG.17